# EUROPÄISCHE PATENTSCHRIFT

(11) **EP 1 020 332 B1**
(45) Veröffentlichungstag und Bekanntmachung des Hinweises auf die Patenterteilung: **14.04.2004**
(21) Anmeldenummer: 99125446.7
(22) Anmeldetag: 20.12.1999
(51) Int. Cl.: B60R 21/20

(54) **Luftsackmodul für Kraftfahrzeuge**
Airbag module for vehicles
Module de coussin de sécurité pour véhicules

(30) Priorität: 18.12.1998 DE 19858691
(43) Veröffentlichungstag der Anmeldung: 19.07.2000
(73) Patentinhaber: Delphi Technologies, Inc., Troy, MI 48007 (US)
(72) Erfinder: Dancasius, Michael, 42105 Wuppertal (DE); Guthke, Detlev W., 58089 Hagen (DE); Standinger, Richard J,, 73579 Schechingen (DE); Ueberhorst, Arnd K.H., 45549 Sprockhövel (DE); Varcus, Johannes, 45549 Sprockhövel (DE)
(74) Vertreter: Manitz, Finsterwald & Partner GbR

(56) Entgegenhaltungen:
- WO-A-97/46424
- DE-A- 3 710 173
- DE-U- 29 816 923
- DE-U- 29 902 033
- US-A- 5 024 464
- US-A- 5 826 901

## Beschreibung

Die Erfindung betrifft ein Luftsackmodul für Kraftfahrzeuge mit einem Gehäuse für einen aufblasbaren Luftsack und einem Gasgenerator gemäß dem Oberbergriff des Anspruchs 1.

Derartige Luftsackmodule dienen dazu, den Luftsack im zusammengefalteten Zustand aufzunehmen und im Crashfall mittels des Gasgenerators aufzublasen. Die Luftsackmodule werden als eine Einheit in das Fahrzeug eingebaut. Dabei kann es zu Konflikten mit anderen Funktionseinheiten des Kraftfahrzeuges kommen, die bisher an den Stellen angeordnet wurden, an denen nunmehr Luftsackmodule vorgesehen werden, um einen optimalen Schutz für die Fahrzeuginsassen zu bieten. Beispielsweise bei im zentralen Bereich des Lenkrades unterzubringenden Fahrerairbags muß für eine optimale Funktionsfähigkeit sowohl des Airbagsystems als auch des Hupsystems des Fahrzeugs gesorgt werden, wenn dieses ebenfalls im zentralen Bereich des Lenkrades vorgesehen werden soll. Des weiteren können Probleme auftreten, wenn während des Betriebs des Fahrzeugs auftretende Schwingungen auf das Luftsackmodul übertragen werden und das Luftsackmodul derart in das Fahrzeug integriert ist, daß ihm neben der Schutzfunktion weitere Aufgaben zugedacht sind. Derartige Zusatzfunktionen können durch Schwingungen des Luftsackmoduls beeinträchtigt werden.

DE 298 169 23U1 beschreibt ein fest mit dem Lenkrad verbundenes Airbagmodul, dessen Gasgenerator als Schwingungstilger dient und dazu in einem elektrisch verformbaren Element im Airbagmodul gelagert ist.

Es ist das der Erfindung zugrundeliegende Problem (Aufgabe), ein Luftsackmodul der eingangs genannten Art zu schaffen, das möglichst einfach aufgebaut ist, nicht durch auftretende Schwingungen beeinträchtigt wird und insbesondere als in eine Lenkradeinheit integrierbarer Fahrerairbag verwendbar ist.

Die Lösung dieser Aufgabe erfolgt erfindungsgemäß durch die Merkmale des Anspruchs 1.

Gemäß der Erfindung erfolgt eine Entkoppelung zwischen dem Gasgenerator und den übrigen Bauteilen des Luftsackmoduls. Hierdurch ist es möglich, die Gesamtmasse des Luftsackmoduls im wesentlichen auf die Masse des Gehäuses und des Luftsacks einerseits und auf die Masse des Gasgenerators andererseits aufzuteilen. Die Masse des Gasgenerators kann hierdurch in vorteilhafter Weise eine Schwingungsdämpfungsfunktion erfüllen. Bei Integration des erfindungsgemäßen Luftsackmoduls in eine Lenkradeinheit können durch geeignete Ausbildung des Koppelorgans störende Schwingungen des Lenkrades vermieden oder reduziert werden.

Gemäß einer bevorzugten Weiterbildung der Erfindung ist der Gasgenerator über das elastische und/oder schwingungsdämpfende Koppelorgan am Gehäuse des Luftsackmoduls befestigt. Hierdurch wird es ermöglicht, das Gehäuse mit dem daran angebrachten Gasgenerator und somit das Luftsackmodul als Ganzes an einem Kraftfahrzeug, beispielsweise einer Lenkradeinheit, anzubringen. Durch das Koppelorgan ist gewährleistet, daß sich der Gasgenerator und das Gehäuse unabhängig voneinander bewegen können, d.h. der Gasgenerator unabhängig von dem Gehäuse Schwingungsbewegungen vollführen kann.

Das Gehäuse und der Gasgenerator bilden erfindungsgemäß keine starr miteinander verbundene Einheit. Diese Entkoppelung von Gasgenerator und Gehäuse ermöglicht es, das erfindungsgemäße Luftsackmodul derart im Kraftfahrzeug zu montieren, daß auftretende Schwingungen gezielt von dem Gehäuse ferngehalten werden. Des weiteren erfolgt durch die Erfindung eine Aufteilung der Gesamtmasse des Luftsackmoduls auf das Gehäuse und den Luftsack einerseits und auf den Gasgenerator andererseits. Die jeweiligen Massen sowie die jeweilige Art der Koppelung mit dem Lenkradsystem können durch die Erfindung gezielt auf Zusatzfunktionen abgestimmt werden, die dem Gehäuse und/oder dem Gasgenerator im eingebauten Zustand übertragen werden sollen.

Während des Betriebs des Fahrzeugs auf die Lenkradeinheit übertragene Schwingungen können durch geeignete Ausführung der Verbindung zwischen dem Gasgenerator und dem Gehäuse, die zur Übertragung von typischerweise auftretenden Schwingungen ausgebildet ist, durch die Masse des Gasgenerators gedämpft werden. Die im Vergleich zur Gesamtmasse des Luftsackmoduls große Masse des Gasgenerators wird somit als Dämpfungsmasse genutzt. Eine Übertragung der Schwingungen auf das Gehäuse des Luftsackmoduls wird erfindungsgemäß daher vermieden. Eine eventuell dem Luftsackmodul zugedachte Zusatzfunktion, beispielsweise die Ausbildung als Teil der Betätigungseinheit einer Fahrzeughupe, wird daher durch während des Betriebs des Fahrzeugs auftretende Schwingungen nicht beeinträchtigt. Dies wiederum vereinfacht die Ausführung einer Lagerung des Gehäuses an der Lenkradeinheit. Das erfindungsgemäße Luftsackmodul eignet sich dazu, als Bestandteil eines kombinierten Airbag- und Hupsystems eingesetzt zu werden.

Erfindungsgemäß ist ferner vorgesehen, dass das Koppelorgan wenigstens zwei Ringelemente und dazwischen mehrere in Umfangsrichtung verteilt angeordnete, elastische und/oder schwingungsdämpfende Koppelelemente umfaßt. Dabei kann sich der Gasgenerator an dem im eingebauten Zustand oberen Ringelement abstützen, beispielsweise über eine Haltelasche, während sich die Anordnung aus Gasgenerator und Koppelorgan über das untere Ringelement am Gehäuse abstützen kann.

Wenn gemäß einer weiteren bevorzugten Ausführungsform der Erfindung der Gasgenerator zumindest teilweise in einem von einem Gehäuseboden begrenzten Gaseinlaßraum angeordnet ist, der durch eine zwischen dem Gasgenerator und dem Gehäuseboden vorgesehene Dichtungsanordnung abgedichtet ist, dann kann die Dichtungsanordnung gemäß einer bevorzugten Weiterbildung der Erfindung als ein bevorzugt elastisch verformbarer Dichtring mit etwa U-förmigem Querschnitt ausgebildet sein, in den das Koppelorgan zumindest teilweise eingelegt ist.

Diese Ausgestaltung der Dichtungsanordnung und des Koppelorgans ermöglicht in einfacher Weise die Vormontage einer kompakten, den Gasgenerator umfassenden Baugruppe. Diese Baugruppe kann in eine unabhängig davon vormontierbare, das Gehäuse mit dem darin angeordneten zusammengefalteten Luftsack umfassende Baugruppe eingesetzt werden.

Hierzu ist vorzugsweise der Gehäuseboden zumindest bereichsweise als bevorzugt nach innen gewölbter und insbesondere napfförmiger Diffusor ausgebildet, der mit mehreren Gaseinlaßöffnungen versehen ist und einen Gaseinlaßraum, in welchem der Gasgenerator zumindest teilweise angeordnet ist, begrenzt. Der das Koppelorgan zumindest teilweise aufnehmende Dichtring sorgt dann im vollständig zusammengesetzten Zustand für die Abdichtung dieses Gaseinlaßraumes, der in einer besonders bevorzugten Variante der Erfindung von dem Diffusor, dem Gasgenerator, dem Dichtring und einer zusammen mit dem Diffusor den Gehäuseboden bildenden Bodenplatte, an der sich der Gasgenerator über das Koppelorgan abstützt, begrenzt ist.

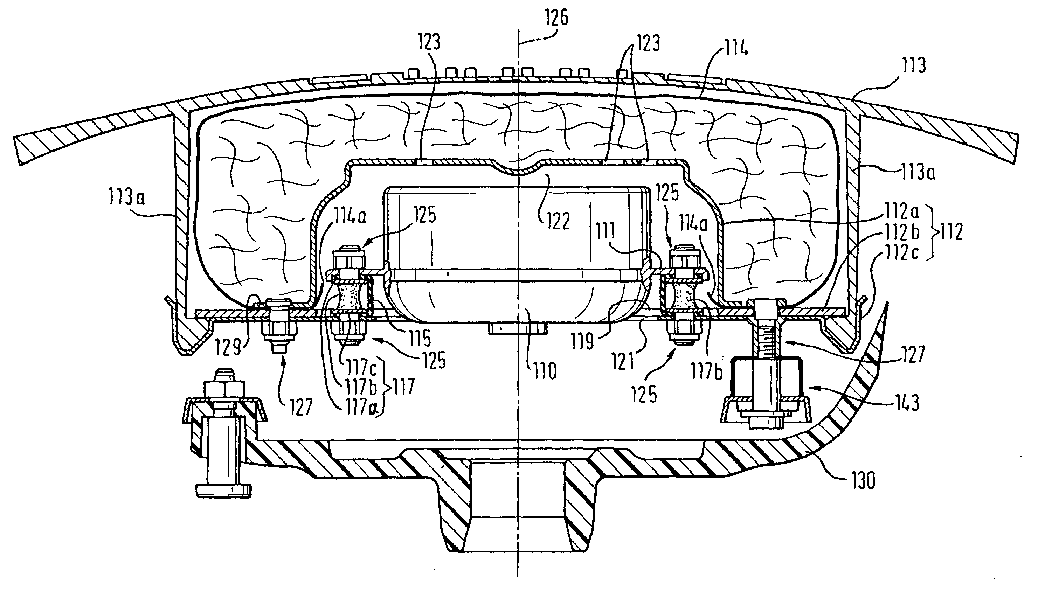

Weitere bevorzugte Ausführungsformen der Erfindung sind in den Unteransprüchen, der Beschreibung sowie der Zeichnung angegeben.

Die Erfindung wird im folgenden beispielhaft unter Bezugnahme auf die Zeichnung beschrieben, denen einzige Figur teilweise eine Ausführungsform eines erfindungsgemäßen Luftsackmoduls in einer geschnittenen Seitenansicht zeigt.

In der dargestellten Ausführungsform bilden das eine kappenförmige Abdekkung 113 und einen im folgenden näher erläuterten Gehäuseboden 112 umfassende Gehäuse und der Gasgenerator 110 eine Einheit, die als Ganzes an einer in der Figur lediglich teilweise dargestellten Lenkradeinheit 130 eines Kraftfahrzeugs anbringbar ist. Der Gasgenerator 110 stützt sich über ein ebenfalls im folgenden näher erläutertes Koppelorgan 117 an dem Gehäuseboden 112 ab, dessen Aufbau nachstehend ausführlicher beschrieben wird.

Der Gehäuseboden 112 umfaßt eine Basisplatte 112b, die mit einer zentralen Öffnung 119 versehen ist. Die Basisplatte 112b wird an ihrem radial äußeren Randbereich von den freien Enden von Seitenwandabschnitten 113a der Abdeckung 113 verriegelnd umgriffen. Durch eine ebenfalls mit einer zentralen Öffnung 121 versehene Halteplatte 112c, welche die freien Enden der Seitenwandabschnitte 113a umgreift, werden die Abdeckung 113 und die Basisplatte 112b zusammengehalten. Die Halteplatte 112c dient somit als ein Sicherungselement, welches verhindert, daß die Seitenwandabschnitte 113a radial nach außen gebogen werden und außer Eingriff mit der Basisplatte 112b gelangen.

Des weiteren umfaßt der Gehäuseboden 112 einen napfförmigen Diffusor 112a, der mit Gaseinlaßöffnungen 123 versehen ist, über die vom Gasgenerator 110 ausgestoßenes Gas in einen vorzugsweise unregelmäßig zusammengefalteten Luftsack 114 strömen kann.

Der Luftsack 114 ist mit seinem das Mundstück begrenzenden Randbereich 114a zwischen einem umlaufenden Klemmabschnitt 129 des Diffusors 112a und der Basisplatte 112b eingeklemmt. Das Aufbringen der Klemmkraft erfolgt durch in Umfangsrichtung verteilt angeordnete Schraubverbindungen 127, mit welchen die den Gehäuseboden 112 bildenden Bauteile (Diffusor 112a, Basisplatte 112b und Halteplatte 112c) zusammengehalten werden.

Durch diese gasdichte Verankerung des Luftsacks 114 am Gehäuseboden 112 sind keine Abdichtungsmaßnahmen im Bereich der freien Enden der Seitenwandabschnitte 113a erforderlich, wo die Basisplatte 112b, die Seitenwandabschnitte 113a und die Halteplatte 112c zusammenwirken.

Der Gasgenerator 110 ist über das Koppelorgan 117 an einem radial inneren Randbereich der Halteplatte 112c angebracht, der über den radial inneren Randbereich der Basisplatte 112b hinaus nach innen vorsteht.

Das Koppelorgan 117 besteht aus zwei flachen Metallringen 117a, 117c, zwischen denen mehrere, in Umfangsrichtung verteilt angeordnete Koppelelemente 117b vorgesehen sind. Die zylinder- oder stiftförmigen Koppelelemente 117b, die aus einem elastisch verformbaren, schwingungsdämpfenden Material - beispielsweise aus Gummi, textilem Material oder einem Verbundmaterial - hergestellt sind und mehr oder weniger stark tailliert sein können, sind mit den Metallringen 117a, 117c fest verbunden.

Der Gasgenerator 110 stützt sich mit einer umlaufenden Haltelasche 111 am oberen Metallring 117a und somit über das Koppelorgan 117 an der Halteplatte 112c ab.

Die Koppelelemente 117b sind jeweils stirnseitig fest mit Schraubenelementen verbunden, beispielsweise durch Verkleben oder durch Einvulkanisieren der Schraubenelemente in das Material der Koppelelemente 117b. Die von den Koppelelementen 117b abstehenden bzw. aus den Koppelelementen 117b herausragenden Gewindeabschnitte der Schraubenelemente sind mit Mutterelementen verschraubbar, um Schraubverbindungen 125 zu bilden, über welche die Haltelasche 111 und der obere Metallring 117a einerseits sowie der untere Metallring 117c und die Halteplatte 112c andererseits aneinander befestigt werden. Hierdurch besteht keine starre durchgehende Verbindung zwischen dem Gasgenerator 110 und der Halteplatte 112c.

Im zusammengesetzten Zustand gemäß der Figur ist ein Gaseinlaßraum 122 vorhanden, der von dem Diffusor 112a, dem Gasgenerator 110 und dessen Haltelasche 111 sowie der Halteplatte 112c begrenzt ist. Zur Abdichtung des Gaseinlaßraumes 122 ist ein ringförmiges Dichtelement 115 mit U-förmigem Querschnitt vorgesehen, das einen radial nach außen offenen Aufnahmekanal für das Koppelorgan 117 bildet.

In den aus einem elastisch verformbaren Material, beispielsweise Gummi, hergestellten Dichtring 115 wird das Koppelorgan 117 bei der Montage eingelegt. Beim Verbinden des Gasgenerators 110 mit der Halteplatte 112c durch die erwähnten Schraubverbindungen 125 wird die obere Seitenwand des Dichtringes 115 zwischen dem Halteflansch 111 und dem oberen Metallring 117a und die untere Seitenwand des Dichtringes 115 zwischen dem unteren Metallring 117c und der Halteplatte 112c eingeklemmt. Auf diese Weise wird mittels des Dichtringes 115 zwischen dem Gasgenerator 110 und der Halteplatte 112c eine gasdichte Verbindung hergestellt. Insbesondere werden durch den Dichtring 115 die Zwischenräume zwischen den in Umfangsrichtung beabstandeten Koppelelementen 117b gasdicht verschlossen. Aus dem Gasgenerator 110 in den Gaseinlaßraum 122 strömendes Gas kann somit nur durch die im Diffusor 112a ausgebildeten Gaseinlaßöffnungen 123 in den Luftsack 114 strömen.

Ein Vorteil der dargestellten Ausführungsform ist die einfache und wirksame Abdichtung des Gaseinlaßraumes 122 durch den Dichtring 115.

Ein weiterer Vorteil dieser Ausführungsform ist, daß das erfindungsgemäße Luftsackmodul aus zwei unabhängig voneinander vormontierbaren Baugruppen zusammengesetzt werden kann. Dabei umfaßt die eine Baugruppe das Gehäuse mit Ausnahme der Halteplatte 112c, d.h. die Abdekkung 113, die Basisplatte 112b, den Diffusor 112a sowie den mit seinem Randbereich 114a zwischen dem Diffusor 112a und der Basisplatte 112b eingeklemmten zusammengefalteten Luftsack 114.

Die andere Baugruppe umfaßt den Gasgenerator 110, den Dichtring 115, das Koppelorgan 117 und die Halteplatte 112c, mit welcher der Gasgenerator 110 über die Schraubverbindungen 125 verschraubt ist.

Diese beiden Baugruppen können unabhängig voneinander vormontiert sowie insbesondere transportiert und gelagert werden. Dadurch wird die Zeit, während der Personen mit dem Gasgenerator 110 umgehen müssen, minimiert.

Trotz dieser Aufteilung auf die erwähnten zwei Baugruppen ist eine einwandfreie Abdichtung des Gaseinlaßraumes 122 im zusammengesetzten Zustand gewährleistet, da die Dichtungsanordnung 115 fest in die den Gasgenerator 110 umfassende Baugruppe integriert ist.

Die den zusammengefalteten Luftsack 114 enthaltende Baugruppe aus Abdeckung 113, Diffusor 112a und Basisplatte 112b (d.h. ohne die Halteplatte 112c) kann ebenfalls als Gehäuse im Sinne der Erfindung angesehen werden.

Zum Zusammensetzen des Luftsackmoduls ist lediglich die den Gasgenerator 110 umfassende Baugruppe von unten durch die zentrale Öffnung 119 der Basisplatte 112b hindurch in den von dem Diffusor 112a begrenzten Gaseinlaßraum 122 einzuführen. Anschließend brauchen lediglich die Schraubverbindungen 127 hergestellt zu werden, indem Mutterelemente auf vormontierte Schraubenelemente geschraubt und festgezogen werden. Auf die nach unten vorstehenden Schraubenelemente wird beim Zusammensetzen der beiden Baugruppen die Halteplatte 112c aufgeschoben, die hierzu mit entsprechenden Öffnungen versehen ist.

In der dargestellten Ausführungsform erfolgt die Anbringung des erfindungsgemäßen Luftsackmoduls an der Lenkradeinheit 130 über in der Figur nur angedeutete Modulbefestigungen 143, die grundsätzlich beliebig ausgeführt sein können. Mit den Modulbefestigungen 143 erfolgt keine schwimmende Lagerung des Luftsackmoduls an der Lenkradeinheit 130.

Durch die konkrete Ausgestaltung des Koppelorgans 117 und insbesondere der Koppelelemente 117b können gezielt bestimmte schwingungsdämpfende bzw. schwingungstilgende Wirkungen der Anordnung eingestellt werden.

### Bezugszeichenliste

- 110: Gasgenerator
- 111: Haltelasche
- 113: Abdeckung
- 114: Luftsack
- 122: Gaseinlaßraum
- 126: Mittelachse
- 130: Lenkradeinheit
- 112: Gehäuseboden
- 112a: Diffusor
- 112b: Basisplatte
- 112c: Halteplatte
- 113a: Seitenwandabschnitt
- 114a: Randbereich des Luftsacks
- 115: Dichtring
- 117: Koppelorgan
- 117a: Ringelement
- 117b: Koppelelement
- 117c: Ringelement
- 119: Öffnung der Basisplatte
- 121: Öffnung der Halteplatte
- 123: Gaseinlaßöffnung
- 125: Schraubverbindung
- 127: Schraubverbindung
- 129: Klemmabschnitt
- 143: Modulbefestigung
- 234: Halteelement

## Patentansprüche

1. Luftsackmodul für Kraftfahrzeuge mit einem Gehäuse (112, 113) für einen aufblasbaren Luftsack (114) und einem Gasgenerator (110), wobei der Gasgenerator (110) über wenigstens ein elastisches und/ oder schwingungsdämpfendes Koppelorgan (117) befestigt ist,
**dadurch gekennzeichnet**
**daß** das Koppelorgan (117) wenigstens zwei Ringelemente (117a, 117c) und dazwischen mehrere in Umfangsrichtung verteilt angeordnete, elastische und/oder schwingungsdämpfende Koppelelemente (117b) umfaßt.

2. Luftsackmodul nach Anspruch 1,
**dadurch gekennzeichnet,**
**daß** der Gasgenerator (110) am Gehäuse (112, 113) befestigt ist.

3. Luftsackmodul nach Anspruch 1 oder 2,
**dadurch gekennzeichnet,**
**dass** der Gasgenerator (110) an dem einen Ringelement ( 117a) und das andere Ringelement ( 117c) am Gehäuse (112, 113) abgestützt ist.

4. Luftsackmodul nach zumindest einem der Ansprüche 1 bis 3,
**dadurch gekennzeichnet,**
**daß** der Gasgenerator (110) zumindest teilweise in einem von einem Gehäuseboden (112) begrenzten Gaseinlaßraum (122) angeordnet ist, der durch eine zwischen dem Gasgenerator (110) und dem Gehäuseboden (112) vorgesehene Dichtungsanordnung (115) abgedichtet ist.

5. Luftsackmodul nach Anspruch 4,
**dadurch gekennzeichnet,**
**daß** als Dichtungsanordnung ein bevorzugt elastisch verformbarer Dichtring (115) mit etwa U-förmigem Querschnitt vorgesehen ist, in den das Koppelorgan (117) zumindest teilweise eingelegt ist.

6. Luftsackmodul nach Anspruch 5,
**dadurch gekennzeichnet,**
**daß** die eine Seitenwand des Dichtringes (115) zwischen dem Gasgenerator (110), insbesondere einer Haltelasche (111) des Gasgenerators (110), und dem einen Ringelement (117a) des Koppelorgans (117) und die andere Seitenwand des Dichtringes (115) zwischen dem anderen Ringelement ( 117c) des Koppelorgans (117) und dem Gehäuseboden (112) angeordnet, insbesondere eingeklemmt ist.

7. Luftsackmodul nach zumindest einem der Ansprüche 1 bis 6,
**dadurch gekennzeichnet,**
**daß** der Gehäuseboden (112) zumindest bereichsweise als bevorzugt nach innen gewölbter und insbesondere napfförmiger Diffusor (112a) ausgebildet ist.

8. Luftsackmodul nach zumindest einem der Ansprüche 1 bis 7,
**dadurch gekennzeichnet,**
**daß** der Gehäuseboden (112) eine Bodenplatte (112b, 112c) und einen Diffusor (112a) umfaßt, der mit der Bodenplatte (112b, 112c) verbunden, insbesondere verschraubt ist, wobei bevorzugt der Gasgenerator (110) an der Bodenplatte (112b, 112c) angebracht ist.

9. Luftsackmodul nach zumindest einem der Anspruch 1 bis 8,
**dadurch gekennzeichnet,**
**daß** der Luftsack (114) am Gehäuseboden (112) befestigt und insbesondere zwischen einem Diffusor (112a) und einer Bodenplatte (112b, 112c) eingeklemmt ist.

10. Luftsackmodul nach Anspruch 8 oder 9,
**dadurch gekennzeichnet,**
**daß** die Bodenplatte (112b, 112c) zweiteilig ausgeführt ist und bevorzugt eine mit einer kappenförmigen Abdeckung (113), des Gehäuses zusammenwirkende Basisplatte (112b) sowie eine die Abdekkung (113) und die Basisplatte (112b) zusammenhaltende Halteplatte (112c) umfaßt, wobei vorzugsweise der Gasgenerator (110) an der Halteplatte (112c) angebracht ist.

11. Luftsackmodul nach zumindest einem der Ansprüche 1 bis 10,
**dadurch gekennzeichnet,**
**daß** es aus zwei jeweils unabhängig voneinander vormontierbaren Baugruppen zusammengesetzt ist, wobei die eine Baugruppe zumindest einen wesentlichen Teil des Gehäuses (112a, 112b, 113) mit dem darin angeordneten zusammengefalteten Luftsack (114) und die andere Baugruppe den Gasgenerator (110) mit dem Koppelorgan (117), der Dichtungsanordnung (115) und der Halteplatte (112c) umfaßt.

12. Luftsackmodul nach zumindest einem der Ansprüche 1 bis 11,
**dadurch gekennzeichnet,**
**daß** es als eine Einheit an einem Kraftfahrzeug, vorzugsweise an einer Lenkradeinheit (130), befestigbar ist.

## Claims

1. An airbag module for motor vehicles comprising a housing (112, 113) for an inflatable airbag (114) and a gas generator (110), with the gas generator (110) being secured via at least one resilient and/or oscillation damping coupling member (117),
**characterised in that**
the coupling member (117) includes at least two ring elements (117a, 117c) and a plurality of resilient and/or oscillation damping coupling elements (117b) arranged between them and distributed in the peripheral direction.

2. An airbag module in accordance with claim 1, **characterised in that** the gas generator (110) is secured to the housing (112, 113).

3. An airbag module in accordance with claim 1 or claim 2, **characterised in that** the gas generator (110) is supported at the one ring element (117a) and the other ring element (117c) is supported at the housing (112, 113).

4. An airbag module in accordance with at least one of claims 1 to 3, **characterised in that** the gas generator (110) is arranged at least partly in a gas inlet space (122) bounded by a housing base (112), the gas inlet space being sealed by a sealing arrangement (115) provided between the gas generator (110) and the housing base (112).

5. An airbag module in accordance with claim 4, **characterised in that** a preferably resiliently deformable sealing ring (115) with an approximately U-shaped cross-section is provided as the sealing arrangement into which the coupling member (117) is inserted at least partly.

6. An airbag module in accordance with claim 5, **characterised in that** the one side wall of the sealing ring (115) is arranged, in particular clamped, between the gas generator (110), in particular a holding lip (111) of the gas generator (110), and the one ring element (117a) of the coupling member (117) and the other side wall of the sealing ring (115) is arranged, in particular clamped, between the other ring element (117c) of the coupling member (117) and the housing base (112).

7. An airbag module in accordance with at least one of claims 1 to 6, **characterised in that** the housing base (112) is made at least regionally as a preferably inwardly arched diffuser (112a), and in particular as a cup-shaped diffuser.

8. An airbag module in accordance with at least one of claims 1 to 7, **characterised in that** the housing base (112) includes a base plate (112b, 112c) and a diffuser (112a) which is connected, in particular screwed, to the base plate (112b, 112c), with the gas generator (110) being attached to the base plate (112b, 112c).

9. An airbag module in accordance with at least one of claims 1 to 8, **characterised in that** the airbag (114) is fastened to the housing base (112) and is in particular clamped between a diffuser (112a) and a base plate (112b, 112c).

10. An airbag module in accordance with claim 8 or claim 9, **characterised in that** the base plate (112b, 112c) is made in two parts and preferably includes a base plate (112b) cooperating with a cap-shaped cover (113) of the housing and a holding plate (112c) holding the cover (113) and the base plate (112b) together, with the gas generator (110) preferably being attached to the holding plate (112c).

11. An airbag module in accordance with at least one of claims 1 to 10, **characterised in that** it is made up of two sub-assemblies which can each be pre-assembled independently of one another, with the one sub-assembly including at least a substantial part of the housing (112a, 112b, 113) with the folded airbag (114) arranged therein and the other sub-assembly including the gas generator (110) with the coupling member (117), the sealing arrangement (115) and the holding palte (112c).

12. An airbag module in accordance with at least one of claims 1 to 11, **characterised in that** it can be secured as a unit to a motor vehicle, preferably to a steering wheel unit (130).

## Revendications

1. Module de coussin à air pour véhicules automobiles, avec un boîtier (112, 113) pour un coussin (114) à air pouvant être insufflé et un générateur de gaz (110), dans lequel le générateur de gaz (110) est fixé par au moins un organe de couplage (117) élastique et/ou amortissant les oscillations, **caractérisé en ce que** l'organe de couplage (117) comprend au moins deux éléments annulaires (117a, 117c), et entre ceux-ci plusieurs éléments de couplage (117b) élastiques et/ou amortissant les oscillations, répartis dans la direction périphérique.

2. Module de coussin à air selon la revendication 1, **caractérisé en ce que** le générateur de gaz (110) est fixé au boîtier (112, 113).

3. Module de coussin à air selon la revendication 1 ou 2, **caractérisé en ce que** le générateur de gaz (110) prend appui sur l'un (117a) des éléments annulaires, et l'autre élément annulaire (117c) s'appuie sur le boîtier (112, 113).

4. Module de coussin à air selon au moins l'une des revendications 1 à 3, **caractérisé en ce que** le générateur de gaz (110) est disposé au moins en partie dans un compartiment (122) d'admission de gaz délimité par un fond (112) du boîtier, et qui est rendu étanche par un agencement d'étanchéité (115) prévu entre le générateur de gaz (110) et le fond (112) du boîtier.

5. Module de coussin à air selon la revendication 4, **caractérisé en ce qu'**une bague d'étanchéité (115) de section transversale à peu près en U, de préférence élastiquement déformable est prévue comme agencement d'étanchéité, dans laquelle l'organe de couplage (117) est introduit au moins partiellement.

6. Module de coussin à air selon la revendication 5, **caractérisé en ce que** l'une des parois latérales de la bague d'étanchéité (115) est disposée, en particulier serrée, entre le générateur de gaz (110), notamment un collier de support (111) du générateur de gaz (110), et un élément annulaire (117a) de l'organe de couplage (117), et l'autre paroi latérale de la bague d'étanchéité (115) est disposée, notamment serrée, entre l'autre élément annulaire (117c) de l'organe de couplage (117) et le fond (112) du boîtier.

7. Module de coussin à air selon au moins l'une des revendications 1 à 6, **caractérisé en ce que** le fond (112) du boîtier est agencé au moins dans une zone sous la forme d'un diffuseur (112a), de préférence incurvé vers l'intérieur et en particulier en forme de godet.

8. Module de coussin à air selon au moins l'une des revendications 1 à 7, **caractérisé en ce que** le fond (112) du boîtier comprend une plaque de fond (112b, 112c) et un diffuseur (112a), qui est relié à la plaque de fond (112b, 112c), en particulier vissé, et de préférence le générateur de gaz (110) est rapporté à la plaque de fond (112b, 112c).

9. Module de coussin à air selon au moins l'une des revendications 1 à 8, **caractérisé en ce que** le coussin à air (114) est fixé sur le fond (112) du boîtier, et en particulier est serré entre un diffuseur (112a) et une plaque de fond (112b, 112c).

10. Module de coussin à air selon la revendication 8 ou 9, **caractérisé en ce que** la plaque de fond (112b, 112c) est réalisée en deux parties, et de préférence comprend une plaque de base (112b) coopérant avec une couverture (113) du boîtier en forme de chapeau, ainsi qu'une plaque de support (112c) maintenant assemblées la couverture (113) et la plaque de base (112b), et de préférence le générateur de gaz (110) est rapporté sur la plaque de support (112c).

11. Module de coussin à air selon au moins l'une des revendications 1 à 10, **caractérisé en ce qu'**il est assemblé à partir de deux groupes constructifs pouvant être pré- montés respectivement indépendamment l'un de l'autre, dans lequel un groupe constructif comprend au moins une partie essentielle du boîtier (112a, 112b, 113) avec le coussin à air (114) disposé replié à 'intérieur, et l'autre groupe constructif comprend le générateur de gaz (110) avec l'organe de couplage (117), l'agencement d'étanchéité (115) et la plaque de support (112c).

12. Module de coussin à air selon au moins l'une des revendications 1 à 11, **caractérisé en ce qu'**il peut être fixé comme une unité sur un véhicule automobile, de préférence sur une unité de volant de direction (130).
